# EUROPEAN PATENT SPECIFICATION

(11) **EP 2 866 141 B1**
(45) Date of publication and mention of the grant of the patent: **04.10.2017**
(21) Application number: 13809194.7
(22) Date of filing: 17.06.2013
(51) Int. Cl.: G06F 9/445, G06F 9/46, G06F 9/455

(54) **SYSTEM CONSTRUCTION DEVICE AND SYSTEM CONSTRUCTION METHOD**
SYSTEMKONSTRUKTIONSVORRICHTUNG UND SYSTEMKONSTRUKTIONSVERFAHREN
DISPOSITIF DE CONSTRUCTION DE SYSTÈME ET PROCÉDÉ DE CONSTRUCTION DE SYSTÈME

(30) Priority: 26.06.2012 JP 2012142899
(43) Date of publication of application: 29.04.2015
(73) Proprietor: NEC Corporation, Tokyo 108-8001 (JP)
(72) Inventor: KURODA, Takayuki, Tokyo 108-8001 (JP)
(74) Representative: Vossius & Partner Patentanwälte Rechtsanwälte mbB
(86) International application number: PCT/JP2013/003758
(87) International publication number: WO 2014/002421

(56) References cited:
- JP-A- 2007 219 866
- JP-A- 2009 522 676
- JP-A- 2011 221 597
- JP-A- 2012 053 869
- US-A1- 2012 084 768

## Description

### [Technical Field]

The present invention relates to a system construction device and a system construction method.

### [Background Art]

System construction is a work of deploying (installing and setting) a program module (hereinafter, module) such as OS (Operating System), middleware (hereinafter, MW), an application (hereinafter, AP), which is a component required for operating a system, on a computer.

Recently, a virtual machine (VM) is used for the system construction. In the system construction using the virtual machine, by deploying a VM image which is a binary file generated in advance for constructing a virtual machine of a system having a specific configuration on a computer, the system having the specific configuration is constructed easily.

A method for constructing systems having different configurations by using the virtual machine mentioned above efficiently is disclosed in NPL 1, for example. According to the technology disclosed in NPL 1, each system is constructed by constructing a virtual machine, which includes a common OS among the systems as a component, using a VM image, and deploying MW modules and AP modules, which are different per the system, on the virtual machine.

Here, as a related technology, managing differential data of virtual images, which are used on a client, on a server is disclosed in PTL 1. Moreover, constructing an active system and a test system, each of which is constructed using a virtual machine, is disclosed in PTL 2.

PTL 1: Japanese Patent Application Laid-Open Publication No. 2012-078893
PTL 2: Japanese Patent Application Laid-Open Publication No. 2010-102414
US 2012/084768 A1 relates to a plurality of virtual disk images being established on a virtual machine wherein the virtual machine identifies corresponding network address translations for a plurality of disks, each having a corresponding plurality of datasets to the plurality of virtual disks using the corresponding network address translations.

### [Non Patent Literature]

[NPL 1] Cristian Magherusan-Stanciu, et al., "Grid Site Installation, Management and Monitoring Application", Proc. of 10th International Symposium on Parallel and Distributed Computing, IEEE Computer Society, 2011, p.25 to P32

### [Summary of Invention]

### [Technical Problem]

In NPL 1 mentioned above, it is necessary for a manager or the like to generate a binary file of the virtual machine, which includes a common component, depending on configurations of the plural systems to be constructed. Here, in the case of constructing systems, which include various configurations different each other, in a data center or the like, there is a problem that a burden of the manager or the like for generating such the binary file becomes severe.

An object of the present invention is to solve the problem mentioned above. Specifically, the object is to provide a system construction device and a system construction method which, in the case of constructing systems having configurations different each other by using a virtual machine including a common component, are able to generate a binary file of the virtual machine depending on the configurations of the plural systems to be constructed, efficiently.

The invention is set out as specified in independent system claim 1 and corresponding method claim 15. A system construction device according to an exemplary aspect of the invention includes: an acquisition means for acquiring a plurality of pieces of configuration information regarding respective systems each indicating a virtual machine and an additional module to be deployed on the virtual machine; and a generation means for generating, when a virtual machine is matched and at least one additional module is matched among the acquired pieces of configuration information, a binary file for operating the matched virtual machine and the matched additional module.

A system construction method according to an exemplary aspect of the invention includes: acquiring a plurality of pieces of configuration information regarding respective systems each indicating a virtual machine and an additional module to be deployed on the virtual machine; and generating, when a virtual machine is matched and at least one additional module is matched among the acquired pieces of configuration information, a binary file for operating the matched virtual machine and the matched additional module.

A computer readable storage medium according to an exemplary aspect of the invention, records thereon a program, causing a computer to perform a method comprising: acquiring a plurality of pieces of configuration information regarding respective systems each indicating a virtual machine and an additional module to be deployed on the virtual machine; and generating, when a virtual machine is matched and at least one additional module is matched among the acquired pieces of configuration information, a binary file for operating the matched virtual machine and the matched additional module.

### [Solution to Problem]

### [Advantageous Effects of Invention]

An advantageous effect of the present invention is that, in the case of constructing systems having configurations different each other by using a virtual machine including a common component, it is possible to generate a binary file of the virtual machine depending on the plural systems to be constructed, efficiently.

### [Brief Description of Drawings]

[Fig. 1] A block diagram showing a characteristic configuration of a first exemplary embodiment of the present invention.
[Fig. 2] A block diagram showing a configuration of a system construction system in the first exemplary embodiment of the present invention.
[Fig. 3] A diagram exemplifying system configuration information in the first exemplary embodiment of the present invention.
[Fig. 4] A diagram exemplifying system information 161 in the first exemplary embodiment of the present invention.
[Fig. 5] A diagram showing an example of generating VM image configuration information in the first exemplary embodiment of the present invention.
[Fig. 6] A diagram exemplifying VM image information 171 in the first exemplary embodiment of the present invention.
[Fig. 7] A diagram showing an example of converting the system configuration information in the first exemplary embodiment of the present invention.
[Fig. 8] A diagram exemplifying a VM image usage record 181 in the first exemplary embodiment of the present invention.
[Fig. 9] A diagram exemplifying an additional construction process record 191 in the first exemplary embodiment of the present invention.
[Fig. 10] A diagram exemplifying a result of calculating usage frequency of a VM image in the first exemplary embodiment of the present invention.
[Fig. 11] A diagram exemplifying a result of calculating an improvement degree of process efficiency of a VM image in the first exemplary embodiment of the present invention.
[Fig. 12] A flowchart showing a VM image generation process in the first exemplary embodiment of the present invention.
[Fig. 13] A flowchart showing a system construction process in the first exemplary embodiment of the present invention.
[Fig. 14] A flowchart showing a VM image deletion process in the first exemplary embodiment of the present invention.
[Fig. 15] A diagram exemplifying system configuration information in a second exemplary embodiment of the present invention.
[Fig. 16] A diagram exemplifying system information 161 in the second exemplary embodiment of the present invention.
[Fig. 17] A diagram showing an example of generating VM image configuration information in the second exemplary embodiment of the present invention.
[Fig. 18] A diagram exemplifying a result of calculating an improvement degree of process efficiency regarding the VM image configuration information in the second exemplary embodiment of the present invention.
[Fig. 19] A diagram exemplifying VM image information 171 in the second exemplary embodiment of the present invention.
[Fig. 20] A diagram showing an example of converting the system configuration information in the second exemplary embodiment of the present invention.
[Fig. 21] A diagram exemplifying system configuration information in a third second exemplary embodiment of the present invention.
[Fig. 22] A diagram exemplifying VM image information 171 in the third exemplary embodiment of the present invention.
[Fig. 23] A diagram showing an example of converting the system configuration information in the third exemplary embodiment of the present invention.

### [Description of Embodiments]

### (First exemplary embodiment)

Next, a first exemplary embodiment of the present invention will be explained.

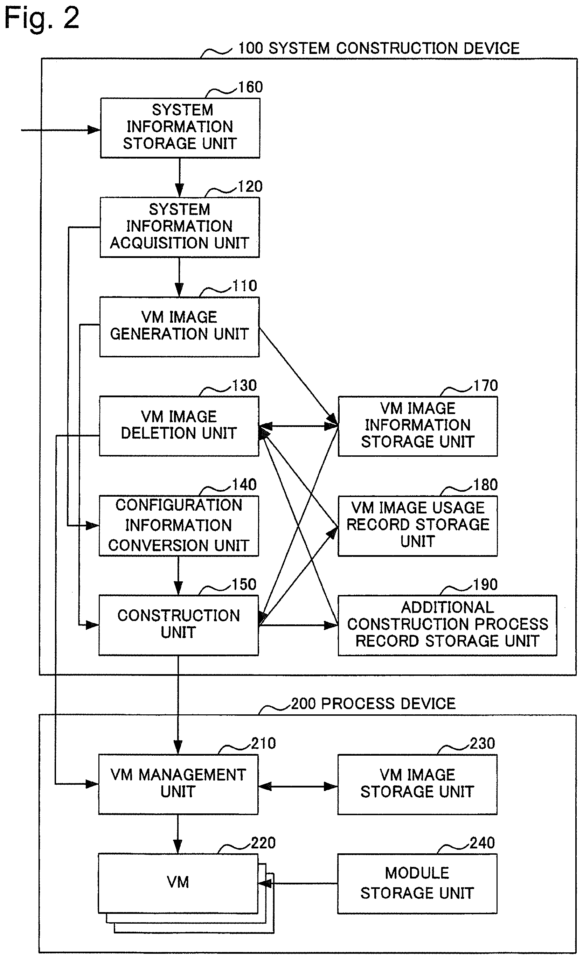

Firstly, a configuration of the first exemplary embodiment of the present invention will be explained. Fig. 2 is a block diagram showing a configuration of a construction system in the first exemplary embodiment of the present invention.

Referring to Fig. 2, the construction system of the first exemplary embodiment of the present invention includes a system construction device 100 and a process device 200. The system construction device 100 and the process device 200 are communicatably connected each other through a network or the like.

In the first exemplary embodiment of the present invention, a configuration of a system is defined using a basic VM image and additional modules as a component. A virtual machine is constructed by deploying the basic VM image on the process device 200. The system is constructed by deploying the additional modules on the virtual machine which is constructed on the process device 200.

Here, the 'deployment' means to send identifiers of a VM image or a module to the process device 200, and to make the process device 200 construct a virtual machine by using the VM image or install the module on the virtual machine.

The VM image is a binary file (image file) for activating a virtual machine, which includes specific modules, on the process device 200. The VM image is generated, for example, on the basis of data of the virtual machine existing in a storage unit at a certain point of time, when the virtual machine has constructed by deploying the specific modules. The VM image includes binary data obtained by combining each of modules in a deployed (installed) state, and setting (configuration) to each of the modules. Moreover, the VM image may include information on a resource (resource information) required by the virtual machine, such as a number of CPUs (Central Processing Unit), a memory size, a disk size or the like. By deploying the VM image on the process device 200, it is possible to construct the virtual machine including the specific modules on the process device 200 without deploying each of the specific modules individually.

The basic VM image is a VM image of a virtual machine which is constructed firstly as a base when constructing a system. The basic VM image is, for example, a VM image of a virtual machine including a common OS among a plurality of systems, as a component.

The additional module is a module which is deployed on the virtual machine constructed with the basic VM image. The additional module is, for example, a module specific to a system, such as MW, AP or the like.

The system construction device 100 constructs a system on the process device 200 according to configuration information of the system (system configuration information) which is included in a system construction request inputted by a user or the like.

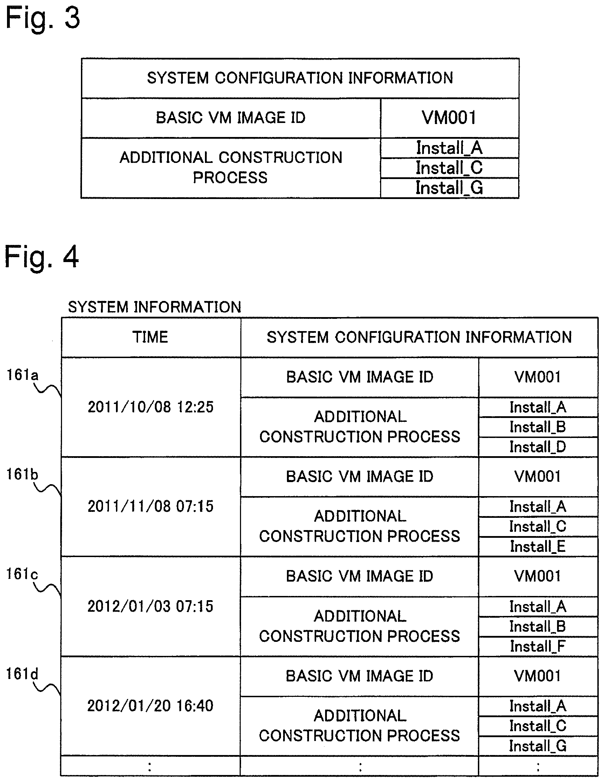

Fig. 3 is a diagram exemplifying the system configuration information in the first exemplary embodiment of the present invention.

In the first exemplary embodiment of the present invention, the configuration information of the system and configuration information of the VM image described later are described with procedures (construction procedures) for constructing the system and the VM image respectively. The configuration information includes an identifier of a basic VM image (basic VM image ID), and a list of additional construction processes carried out on the virtual machine constructed by using the basic VM image. Here, an order from a top of the list of the additional construction processes indicates an order for carrying out each additional construction process. The additional construction process includes a command for carrying out an install program of the virtual machine or the like on OS, and an identifier of a module to be deployed (installed) by the install program.

In the system configuration information, as the basic VM image, a VM image (initial VM image) generated by a manager or the like, in advance, is designated. The initial VM image includes the common OS among a plurality of the systems and the resource information, for example. Moreover, as the additional construction process, a process for deploying the module which is specific to the system, such as MW, AP or the like, is designated.

In the system configuration information shown in Fig. 3, initial VM image 'VM001' is designated as the basic VM image, and 'Install_A', 'Install_B' and 'Install_G' are designated as the additional construction process. The system configuration information indicates that installations of modules 'A', 'C' and 'G' are carried out in this sequential order by carrying out an install program indicated by the command 'Install', on the virtual machine constructed with the initial VM image 'VM001'.

Note that the command designated in the additional construction process may be a command other than 'Install' as far as the command can install a module on the virtual machine. Moreover, a construction unit 150 or a predetermined program on the virtual machine may convert description on the additional construction process into a command which can be carried out on the virtual machine.

The system construction device 100 includes a VM image generation unit (or generation unit) 110, a system information acquisition unit (or acquisition unit) 120, a VM image deletion unit 130, a configuration information conversion unit 140, the construction unit 150, a system information storage unit 160, a VM image information storage unit 170, a VM image usage record storage unit 180, and an additional construction process record storage unit 190.

Here, the system information storage unit 160 stores system information 161 (161a, 161b, ...) which is information with respect to each system for which the system construction request is received.

Fig. 4 is a diagram exemplifying the system information 161 in the exemplary embodiment of the present invention. As shown in Fig. 4, the system information 161 includes a time at which the system construction request is received, and the system configuration information included in the system construction request.

The system information acquisition unit 120 acquires the system configuration information from the system information storage unit 160.

The VM image generation unit 110 generates a VM image, which can be used as a common basic VM image among the different systems, on the basis of the acquired plural pieces of the system configuration information

The VM image information storage unit 170 stores VM image information 171 (171a, 172b, ...) with respect to each VM image which has been generated already.

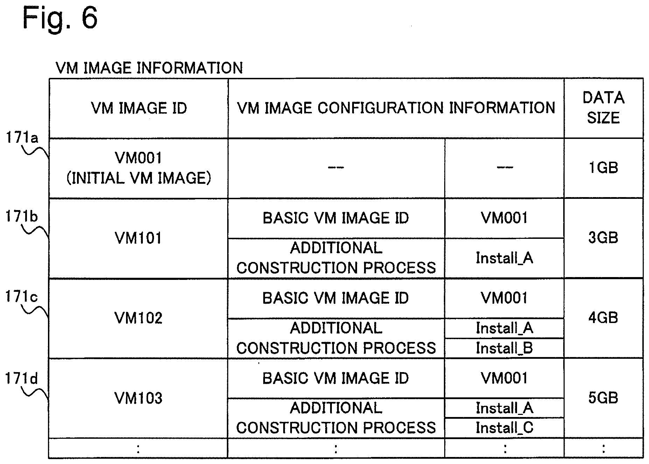

Fig. 6 is a diagram exemplifying the VM image information 171 in the first exemplary embodiment of the present invention. In the example shown in Fig. 6, the VM image information 171 includes an identifier of a VM image (VM image ID) which has been generated already, configuration information of the VM image (VM image configuration information) and a data size of the VM image. In Fig. 6, a VM image, for which the VM image configuration information is set like VM image 'VM101', is a VM image generated by the VM image generation unit 110. A VM image, for which the VM image configuration information is not set like VM image 'VM001', is the initial VM image generated by a manager or the like in advance.

The configuration information conversion unit 140 converts the system configuration information, which is inputted by a user or the like, into system configuration information in which the VM image generated by the VM image generation unit 110 is set as a basic VM image.

The construction unit 150 constructs a system on the process device 200 according to the system configuration information converted by the configuration information conversion unit 140.

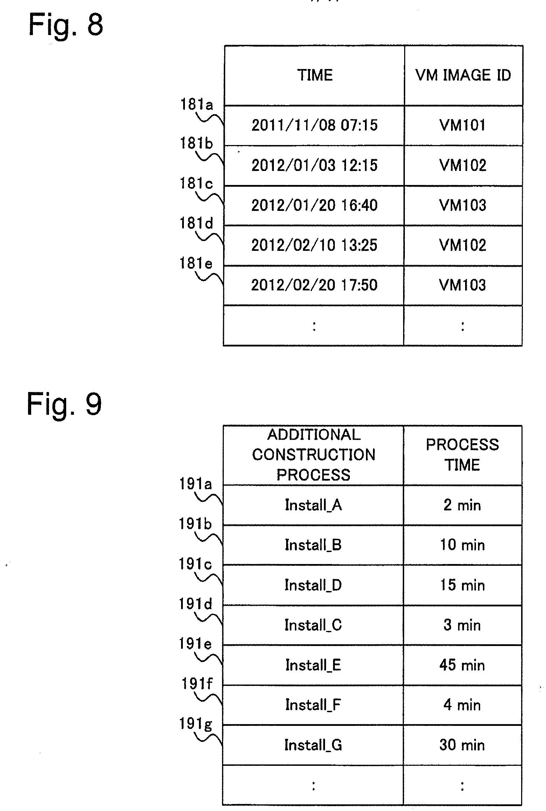

The VM image usage record storage unit 180 stores a VM image usage record 181 (181a, 182b, ...). The VM image usage record 181 for a VM image is a record indicating that the VM image has been used as a basic VM image in the system construction. Fig. 8 is a diagram exemplifying the VM image usage record 181 in the first exemplary embodiment of the present invention. In the example shown in Fig. 8, the VM image usage record 181 includes an identifier of a VM image and a time at which the VM image has been used as a basic VM image.

The additional construction process record storage unit 190 stores an additional construction process record 191 (191a, 191b, ...). The additional construction process record 191 for an additional construction process is a record indicating that the additional construction process has been carried out in the system construction. Fig. 9 is a diagram exemplifying the additional construction process record 191 in the first exemplary embodiment of the present invention. In the example shown in Fig. 9, the additional construction process record 191 includes an additional construction process and a process time consumed for the additional construction process. Note that the process time may be an average process time of respective additional construction processes.

The VM image deletion unit 130 deletes a VM image on the basis of the VM image usage record 181 and the additional construction process record 191.

The VM image generation unit 110, the system information acquisition unit 120, the VM image deletion unit 130, the configuration information conversion unit 140 and the construction unit 150 may be implemented on a program-controlled computer which includes CPU and a storage medium storing a program. The system information storage unit 160, the VM image information storage unit 170, the VM image usage record storage unit 180 and the additional construction process record storage unit 190 may be configured as a separate storage medium or configured as one storage medium.

Moreover, at least one of the system information storage unit 160, the VM image information storage unit 170, the VM image usage record storage unit 180 and the additional construction process record storage unit 190 may be included in another device which is communicatably connected with the system construction device 100.

The process device 200, which is a computer including a resource such as CPU, a memory, a disk and the like, includes a VM management unit 210, a VM image storage unit 230 and a module storage unit 240.

The VM management unit 210 is a program, which manages a virtual machine (VM 220), such as the hypervisor or the like. The VM management unit 210 obtains resources, which are required for constructing a virtual machine, according to resource information included in the VM image designated by the system construction device 100. Then, the VM management unit 210 constructs the VM 220 by using binary data included in the VM image. Moreover, the VM management unit 210 generates a VM image of a system constructed on the VM 220.

An install program on the VM 220 installs a module designated by the system construction device 100 on the VM 220.

The VM image storage unit 230 stores a real form (data file) of the initial VM image generated in advance by a manager or the like.

The module storage unit 240 stores a real form (data file) of each module to be deployed on the VM 220.

Next, an operation of the system construction device 100 in the first exemplary embodiment of the present invention will be explained.

### (VM image generation process)

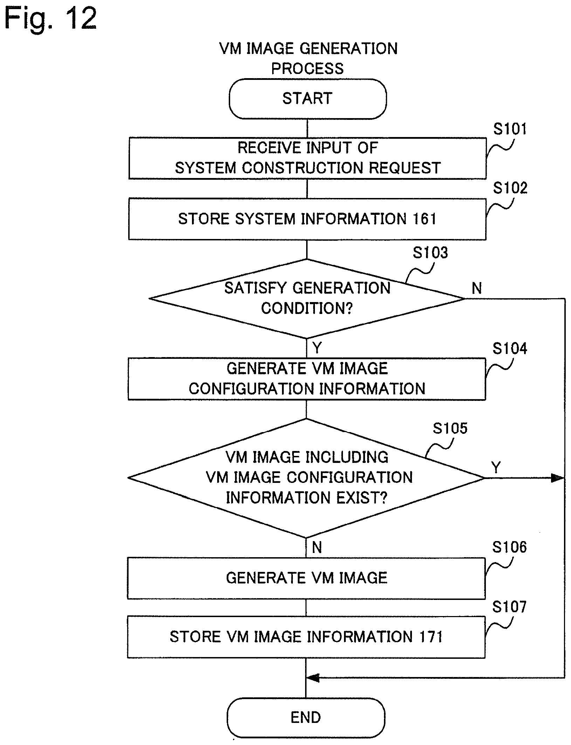

Firstly, a process for generating a VM image (VM image generation process) will be explained. Fig. 12 is a flowchart showing the VM image generation process in the first exemplary embodiment of the present invention.

Here, it is assumed that the pieces of system information 161a to 161c shown in Fig. 4 are stored in the system information storage unit 160, and the pieces of the VM image information 171a to 171c shown in Fig. 6 are stored in the VM image information storage unit 170.

The system construction device 100 receives an input of a new system construction request, which includes the system configuration information, from a user (Step S101).

For example, the system construction device 100 receives an input of a new system construction request including the system configuration information shown in Fig. 3.

The system construction device 100 stores the system information 161, which includes the system configuration information, included in the system construction request in the system information storage unit 160 (Step S102).

For example, the system construction device 100 stores system information 161d shown in Fig. 4 in the system information storage unit 160.

The VM image generation unit 110 acquires the system configuration information stored in the system information storage unit 160 through the system information acquisition unit 120, and judges whether a VM image generation condition is satisfied (Step S103).

Here, as the generation condition, 'there is a set of pieces of system configuration information, in which a VM image is the same and at least one top additional construction process in sequential order of a list of additional construction processes is the same' is used.

In the case that the generation condition is satisfied in Step S103 (Y in Step S103), the VM image generation unit 110 generates VM image configuration information for the set of pieces of system configuration information which satisfy the generation condition (Step S104).

Here, the VM image generation unit 110 sets an identifier of the basic VM image of the set of the pieces of system configuration information, which satisfy the generation condition, as an identifier of the basic VM image of the VM image configuration information. Then, the VM image generation unit 110 sets the same top additional construction process in sequential order of the list of additional construction processes of the set, as an additional construction process of the VM image configuration information.

In the case that there are a plurality of sets of pieces of system configuration information which satisfy the generation condition, the VM image generation unit 110 may generate the VM image configuration information for a set of pieces of system configuration information including the largest number of the same top additional construction processes in sequential order of a list of additional construction processes.

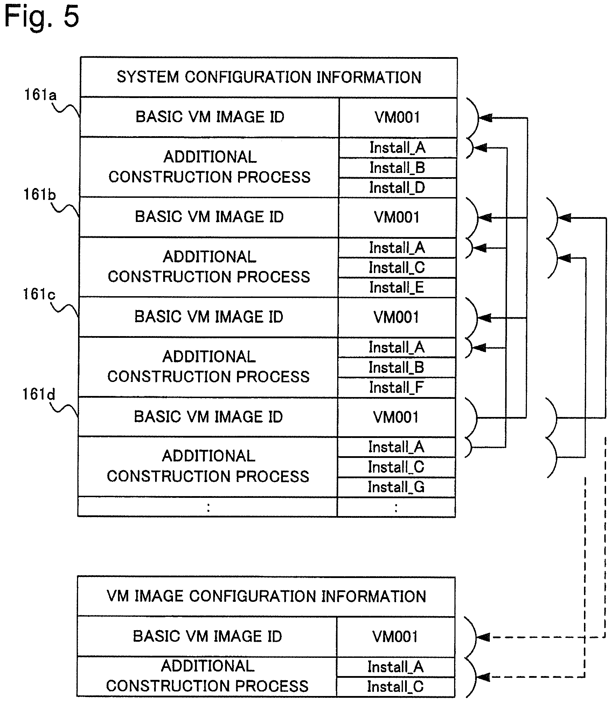

Fig. 5 is a diagram showing an example of generating the VM image configuration information in the first exemplary embodiment of the present invention.

For example, in Fig. 5, in a set of the system configuration information of the system information 161d and the pieces of system configuration information of the pieces of system information 161a to 161c, basic VM image 'VM001' is the same and top additional construction process 'Install_A' in sequential order of the list of additional construction processes is the same. Accordingly, the set of the system configuration information of the system information 161d and the pieces of the system configuration information of the pieces of the system information 161a to 161c satisfy the generation condition mentioned above.

Moreover, in Fig. 5, in a set of the system configuration information of the system information 161d and the system configuration information of the system information 161b, basic VM image 'VM001' is the same and top additional construction processes 'Install_A' and 'Install C' in sequential order of the list of additional construction processes are the same. Accordingly, the set of the system configuration information of the system information 161d and the system configuration information of the system information 161b satisfy the generation condition mentioned above.

The VM image generation unit 110 generates VM image configuration information, to which basic VM image 'VM001' and additional construction processes 'Install_A', and 'Install_C' are set, regarding the set of the system configuration information of the system information 161d, and the system configuration information of the system information 161b which have the largest number of the same top additional construction processes.

The VM image generation unit 110 judges whether VM image information 171, which includes the generated VM image configuration information, exists in the VM image information storage unit 170 (Step S105).

In the case that the VM image information 171, which includes the generated VM image configuration information, does not exist (N in Step S105), the VM image generation unit 110 constructs a virtual machine based on the generated VM image configuration information and generates a VM image of the virtual machine, through the construction unit 150 (Step S106).

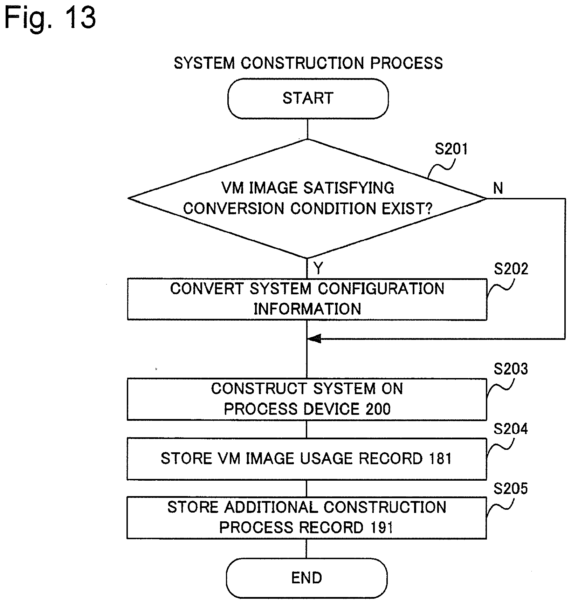

In this case, the VM image generation unit 110 sends the generated VM image configuration information to the construction unit 150. The construction unit 150 constructs the virtual machine based on the VM image configuration information by carrying out a process similar to a system construction process (Step S203 in Fig. 13) described later. The construction unit 150 instructs the VM management unit 210 of the process device 200 to generate the VM image of the constructed virtual machine. The VM management unit 210 generates the VM image of the constructed virtual machine and stores the generated VM image in the VM image storage unit 230. The VM image generation unit 110 acquires an identifier of the generated VM image through the construction unit 150.

For example, the VM image generation unit 110 generates the VM image according to the VM image configuration information shown in Fig. 5, and acquires an identifier 'VM103' of the generated VM image.

The VM image generation unit 110 stores the identifier of the generated VM image, the VM image configuration information and the data size in the VM image information storage unit 170 as the VM image information 171 (Step S107), and ends the process.

For example, the VM image generation unit 100 stores VM image information 171d with respect to VM image 'VM103' in the VM image information storage unit 170, as shown in Fig. 6.

On the other hand, in the case that the generation condition is not satisfied in Step S103 (N in Step S103) or in the case that the VM image information 171 including the generated VM image configuration information has existed already in Step S105 (Y in Step S105), the VM image generation unit 110 ends the process.

### (System construction process)

Next, a process for constructing a system (system construction process) according to a system construction request inputted by a user or the like will be explained. Fig. 13 is a flowchart showing the system construction process in the first exemplary embodiment of the present invention.

The system construction process is carried out following the VM image generation process mentioned above in the case that the system construction device 100 receives a new system construction request from a user.

Here, it is assumed that, as a result of carrying out the VM image construction process in response to the new system construction request including the system configuration information shown in Fig. 3, the pieces of the VM image information 171a to 171d shown in Fig. 6 are stored in the VM image information storage unit 170. Moreover, it is assumed that the VM image usage records 181a and 181b shown in Fig. 8 are stored in the VM image usage record storage unit 180, and the additional construction process records 191a to 191f shown in Fig. 9 are stored in the additional construction process record storage unit 190.

The configuration information conversion unit 140 of the system construction device 100 acquires system configuration information, which is included in the new system construction request, from the system information storage unit 160 through the system information acquisition unit 120. The configuration information conversion unit 140 judges whether a VM image, which satisfies a conversion condition for the acquired system configuration information, exists in the system configuration information (Step S201).

Here, as the conversion condition, 'a basic VM image is the same as the basic VM image of the system configuration information, all of additional construction processes are included in the additional construction processes of the system configuration information, and an order of each additional construction process is the same as the order of the same additional construction processes of the system configuration information' is used. The configuration information conversion unit 140 judges whether a VM image, which has VM image configuration information satisfying the conversion condition, exists in the VM image information storage unit 170.

In the case that a VM image which satisfies the conversion condition exists in Step S201 (Y in Step S201), the configuration information conversion unit 140 converts the system configuration information by using the VM image configuration information of the VM image which satisfies the conversion condition.

Here, the configuration information conversion unit 140 sets an identifier of the VM image, which satisfies the conversion condition, as an identifier of a basic VM image of the system configuration information. Then, the configuration information conversion unit 140 sets differential additional construction processes as additional construction processes of the system configuration information. The differential additional construction processes are obtained by deleting additional construction processes of the VM image configuration information satisfying the conversion condition from additional construction processes of the system configuration information.

In the case that there are a plurality of VM images which satisfy the conversion condition, the configuration information conversion unit 140 may convert the system configuration information by using VM image configuration information of a VM image which has the largest number of additional construction processes (VM image configuration information of a VM image with which the smallest number of the differential additional construction processes are obtained).

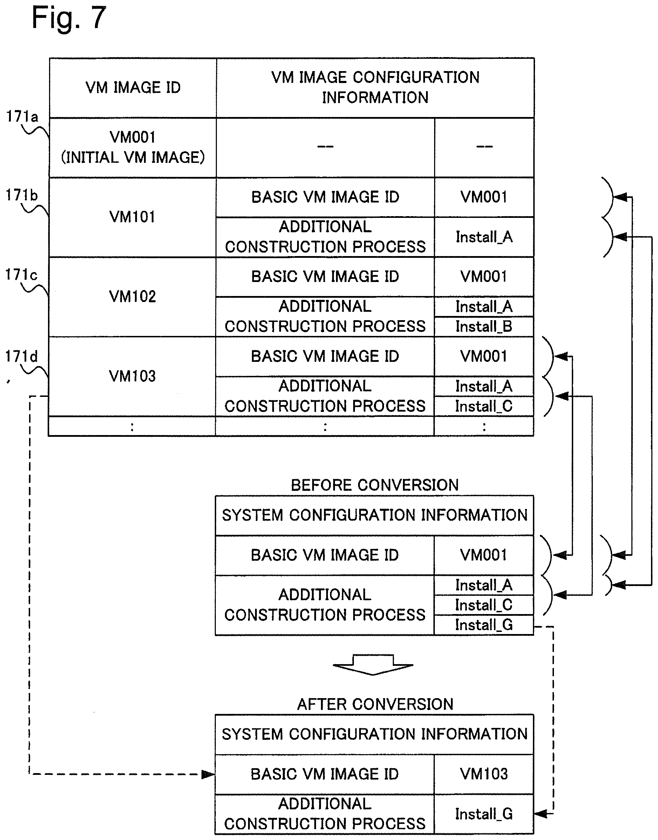

Fig. 7 is a diagram showing an example of converting the system configuration information in the first exemplary embodiment of the present invention.

For example, in Fig.7, regarding VM image 'VM101' of the VM image information 171b, basic VM image 'VM001' in the VM image configuration information is the same as a basic VM image of the system configuration information (before conversion), and additional construction process 'Install_A' is included in additional construction processes of the system configuration information, and an order of 'Install_A' is the same as that of the system configuration information. Accordingly, VM image 'VM101' satisfies the above-mentioned conversion condition.

Moreover, regarding VM image 'VM103' of the VM image information 171d, basic VM image 'VM001' in the VM image configuration information is the same as the basic VM image of the system configuration information (before conversion), and additional construction processes 'Install_A' and 'Install_C' are included in the additional construction processes of the system configuration information, and an order of 'Install_A' and 'Install_C' is the same as that of the system configuration information. Accordingly, VM image 'VM103' satisfies the above-mentioned conversion condition.

The configuration information conversion unit 140 converts the system configuration information by using the VM image configuration information of VM image 'VM103' which has the largest number of additional construction processes.

As shown in Fig.7, the configuration information conversion unit 140 converts the system configuration information (before conversion) into system configuration information (after conversion) in which 'VM103' is set as a basic VM image, and 'Install_G, which is obtained by deleting the additional construction processes of VM image 'VM103' from the additional construction processes of the system configuration information, is set as an additional construction process.

On the other hand, in the case that there is no VM image which satisfies the conversion condition (N in Step S201), the configuration information conversion unit 140 proceeds to Step S203.

Next, the construction unit 150 constructs the system on the process device 200 according to the system configuration information (Step 203).

Here, the construction unit 150 instructs the VM management unit 210 to construct VM 220 designating the identifier of the basic VM image which is designated in the system configuration information, to the VM management unit 210 of the process device 200. The VM management unit 210 acquires the designated basic VM image to construct the VM 220.

Then, the construction unit 150 carries out commands, which are designated in each additional construction process of the system configuration information, on the VM 220, from a top of the commands, sequentially. The install program on the VM 220 acquires a module, which is designated with the command, from the module storage unit 240, and deploys the module on the VM 220. Here, the construction unit 150 acquires a process time which has been consumed for carrying out each additional construction process.

For example, the construction unit 150 deploys basic VM image 'VM103' on the process device 200 according to the system configuration information (after conversion) shown in Fig. 7. Then, the construction unit 150 deploys module 'G' on the process device 200 by carrying out additional construction process 'Install_G'.

By this, a system, which has the same configuration as the configuration of the system to be constructed according to the system configuration information (before conversion) shown in Fig. 7, can be constructed according to the system configuration information (after conversion) shown in Fig. 7.

The construction unit 150 stores the VM image usage record 181, which is related to the deployed VM image, in the VM image usage record storage unit 180 (Step S204). Here, the construction unit 150 sets and stores an identifier of the deployed VM image and a deployment (usage) time in the VM image usage record 181.

For example, the construction unit 150 stores a VM image usage record 181c regarding VM image 'VM103' shown in Fig. 8 in the VM image usage record storage unit 180.

The construction unit 150 stores the additional construction process record 191, which is related to each additional construction process, in the additional construction process record storage unit 190 (Step S205). Here, the construction unit 150 sets and stores the additional construction process which has been carried out, and a process time, which has been consumed for carrying out the additional construction process, in the additional construction process record 191.

For example, the construction unit 150 stores an additional construction process record 191g regarding additional construction process 'Install_G' shown in Fig. 9 in the additional construction process record storage unit 190.

### (VM image deletion process)

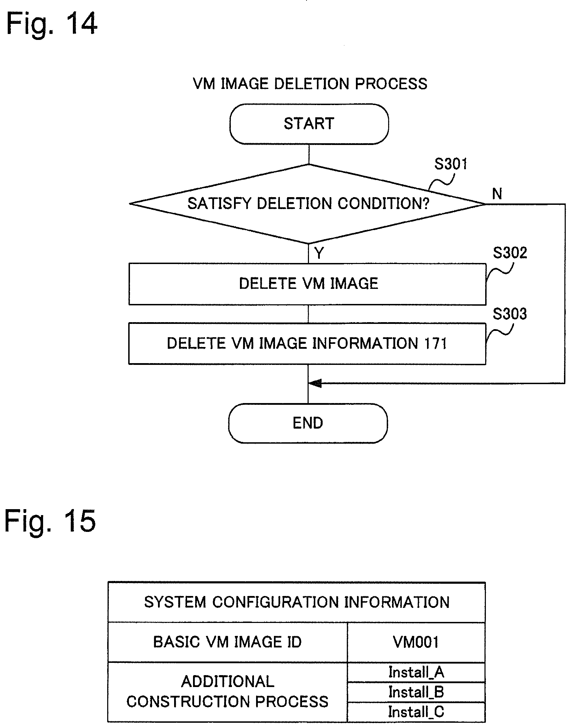

Next, a process for deleting a VM image (VM image deletion process) will be explained. Fig. 14 is a flowchart showing the VM image deletion process in the first exemplary embodiment of the present invention.

The VM deletion process is carried out periodically, for example. The VM image deletion process may be carried out in response to a user's request. The VM image deletion process may be carried out after receiving the system construction request (Fig. 12) from a user in the VM image generation process mentioned above (Step S101).

The VM image deletion unit 130 judges whether a deletion condition of the VM image is satisfied (Step S301).

Here, as the deletion condition, 'there is a VM image having usage frequency equal to or smaller than a predetermined threshold value' is used. The usage frequency is calculated on the basis of the VM image usage record 181 of the VM image usage record storage unit 180, for example, on the basis of usage time for a predetermined period of time.

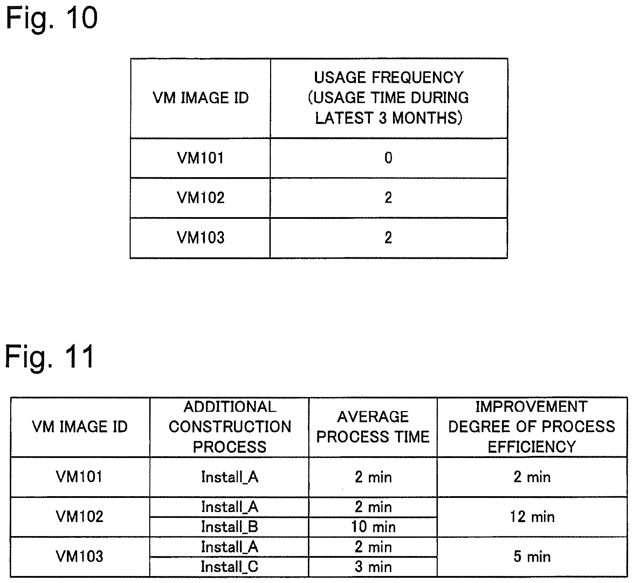

Fig. 10 is a diagram exemplifying a result of calculating the usage frequency of the VM image in the first exemplary embodiment of the present invention.

For example, it is assumed that VM image usage records 181a to 181e are stored in the VM image usage record storage unit 180, and the usage frequency is calculated on the basis of 'usage time for the latest three months'. In this case, the usage frequency of each VM image is calculated as shown in Fig. 10. For example, in the case that the deletion condition 'there is a VM image having zero as usage frequency' is used, VM image 'VM101' in Fig. 10 satisfies the deletion condition.

In the case that the deletion condition is satisfied in Step S301 (Y in Step S301), the VM image deletion unit 130 deletes the VM image which satisfies the deletion condition (Step S302).

Here, the VM image deletion unit 130 instructs the VM management unit 210 of the process device 200 to delete the VM image which satisfies the deletion condition. The VM management unit 210 deletes the designated VM image from the VM image storage unit 230.

For example, the VM image deletion unit 130 deletes VM image 'VM101'.

The VM image deletion unit 130 deletes VM image information 171, which is related to the deleted VM image, from the VM image information storage unit 170.

For example, the VM image deletion unit 130 deletes the VM image information 171b shown in Fig. 6, which is related to VM image 'VM101', from the VM image information storage unit 170.

Note that, in Step S301, the VM image deletion unit 130 may use a deletion condition that 'there is a VM image having an improvement degree of process efficiency is equal to or lower than a predetermined threshold value'.

Here, as the improvement degree of process efficiency, a total value of process times of plural additional construction processes in the VM image configuration information, which is calculated on the basis of the additional construction process record 191 stored in the additional construction process record storage unit 190, can be used.

In the exemplary embodiment of the present invention, it is assumed that a difference between a time required for deploying a VM image in which additional modules have been deployed and a time required for deploying a VM image in which the additional modules have not been deployed is quite shorter than a time required for deploying the additional modules (additional construction processes). In this case, it is conceivable that, by carrying out the system construction using the VM image, a system construction time is shortened by the time indicated by the improvement degree of process efficiency, in comparison with a case of carrying out each additional construction process for the VM image.

Fig. 11 is a diagram exemplifying a result of calculating the improvement degree of process efficiency of a VM image in the first exemplary embodiment of the present invention.

For example, it is assumed that the additional construction process records 191a to 191g shown in Fig. 9 are stored in the additional construction process record storage unit 190. In this case, the improvement degree of process efficiency of each VM image is calculated as shown in Fig. 11. In Fig. 11, for example, by carrying out the system construction using VM image 'VM102', it is expected to shorten the system construction time by 12 minutes in comparison with a case of carrying out additional construction processes 'Install_A' and 'Install_B'. Moreover, by carrying out the system construction using VM image 'VM103', it is expected to shorten the system construction time by 5 minutes in comparison with a case of carrying out additional construction processes 'Install_A' and 'Install_C'.

Then, in the case that the deletion condition is that 'there is a VM image having an improvement degree of process efficiency is shorter than 10 minutes', VM image 'VM101' and VM image 'VM103' satisfy the deletion condition. The VM image deletion unit 130 deletes VM image 'VM101' and VM image 'VM103'.

Note that, in order to calculate the improvement degree of process efficiency, another value, which indicates a process load of each additional construction process, such as CPU usage rate, a memory usage rate or the like at a time when carrying out each additional construction process, may be used instead of the process time of each additional construction process.

Moreover, in Step S301, the VM image deletion unit 130 may use a deletion condition 'a total of data sizes of the VM images is equal to or larger than a predetermined threshold value'.

In this case, a total of the data sizes of the VM images is calculated on the basis of the data size which is set in the VM image information 171 of each VM image.

For example, it is assumed that the pieces of the VM image information 171a to 171d shown in Fig. 6 are stored in the VM image information storage unit 170. In this case, a total of the data sizes of the VM images is 13 GB. Here, in the case that the deletion condition is that 'a total of data sizes of the VM images is equal to or larger than 10 GB', the deletion condition is satisfied.

Then, the VM image deletion unit 130 deletes, for example, a VM image which has the largest data size.

For example, the VM image deletion unit 130 deletes VM image 'VM103'.

Here, instead of deleting the VM image which has the largest data size, the VM image deletion unit 130 may delete a VM image of which the usage frequency, the improvement degree of process efficiency, or both of them is equal to or smaller than a predetermined threshold value or smaller than that of another VM image.

On the other hand, in the case that the deletion condition is not satisfied in Step S301 (N in Step S301), the VM image deletion unit 130 ends the process.

As described above, the operation of the first exemplary embodiment of the present invention is completed.

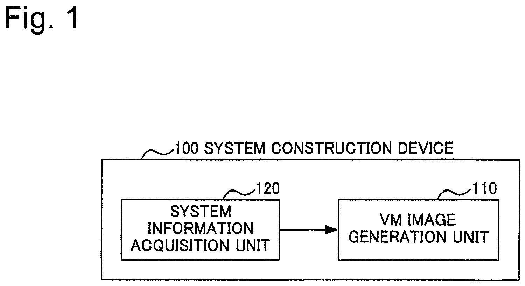

Next, a characteristic configuration of the first exemplary embodiment of the present invention will be explained. Fig. 1 is a block diagram showing the characteristic configuration of the first exemplary embodiment of the present invention.

Referring to Fig. 1, the system construction device 100 includes a system information acquisition unit 120 and a VM image generation unit 110.

The system information acquisition unit 120 acquires a plurality of pieces of configuration information regarding respective systems each indicating a virtual machine and an additional module to be deployed on the virtual machine.

The VM image generation unit 110 generates, when a virtual machine is matched and at least one additional module is matched among the acquired pieces of configuration information, a binary file for operating the matched virtual machine and the matched additional module.

According to the first exemplary embodiment of the present invention, in the case of constructing the systems having configurations different each other, by using a virtual machine including a common component, it is possible to generate a binary file of the virtual machine depending on the plurality of systems to be constructed, efficiently.

The reason is that, in the case that a virtual machine is matched and at least one additional module is matched among the pieces of configuration information, the VM image generation unit 110 generates the binary file (VM image) for operating the matched virtual machine and the matched additional module.

Moreover, according to the first exemplary embodiment of the present invention, in the case of constructing the systems having configurations different each other, by using a virtual machine including a common component, it is possible to carry out the system construction more efficiently in comparison with a case of using a VM image of a virtual machine having a specific module such as OS or the like as a component.

The reason is that the VM image generation unit 110 generates a VM image regarding a set of systems, which have the largest number of the same additional construction processes. By this, a number of the additional construction processes becomes small in the system configuration information which is converted by the system configuration information conversion unit 140 using the VM image, and therefore the time required for the system construction is shortened.

Moreover, according to the first exemplary embodiment of the present invention, even in the case that a configuration of the system to be constructed is not apparent in advance, or is changed, it is possible to generate a VM image which is adaptive to the configuration of the system to be constructed.

The reason is that, in the case that a new system construction request is inputted, the VM image generation unit 110 generates the VM image on the basis of a plurality of pieces of system configuration information including the piece of system configuration information of the new system construction request.

Moreover, according to the first exemplary embodiment of the present invention, it is possible to manage the VM image efficiently. The reason is that the VM image deletion unit 130 deletes the VM image on the basis of a predetermined condition regarding usage frequency, an improvement degree of process efficiency, or the data size of the VM image.

### (Second exemplary embodiment)

Next, a second exemplary embodiment of the present invention will be explained.

The second exemplary embodiment of the present invention is different from the first exemplary embodiment of the present invention in a point that, in the VM image generation process, in the case that there are a plurality of sets of pieces of system configuration information each of which satisfies the generation condition, a VM image is generated regarding a set which can generate VM image configuration information having the largest improvement degree of process efficiency.

A configuration of the second exemplary embodiment of the present invention is the same as the configuration of the first exemplary embodiment (Fig. 2) of the present invention.

Next, an operation of the system construction device 100 in the second exemplary embodiment of the present invention will be explained.

In the second exemplary embodiment of the present invention, it is assumed that modules to be deployed by the additional construction processes are independent each other, and it is possible to change an order of each of the additional construction processes. In this case, it is not necessary to compare the order of the additional construction process when judging whether the generation condition of the VM image is satisfied and judging whether the conversion condition of the system configuration information is satisfied.

### <VM image generation process>

Firstly, the VM image generation process will be explained.

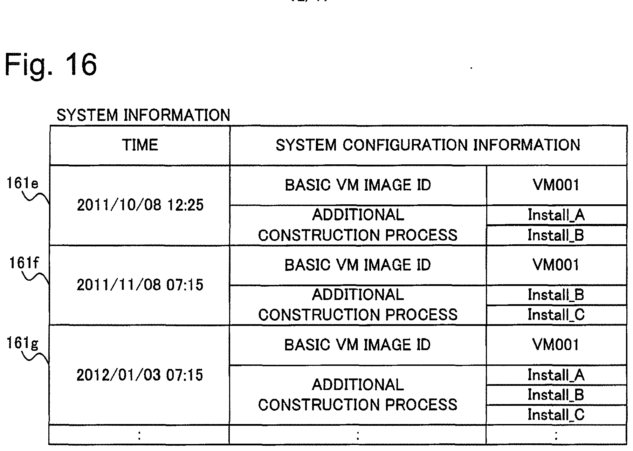

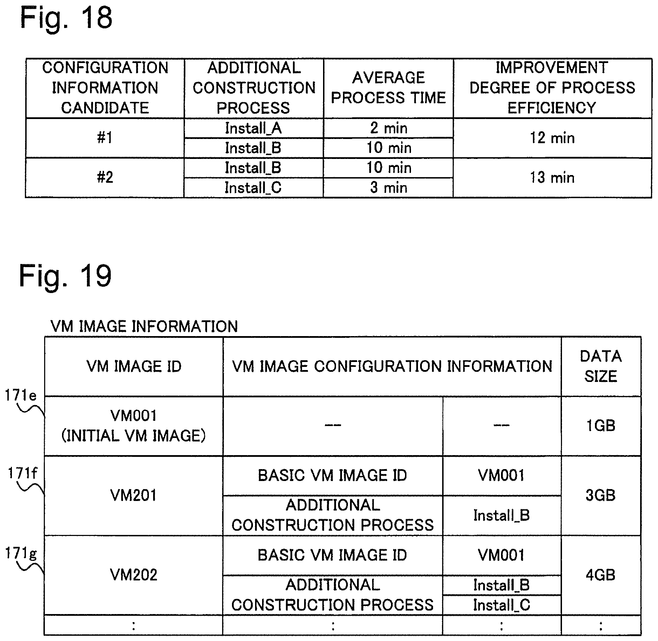

Fig. 15 is a diagram exemplifying the system configuration information in the second exemplary embodiment of the present invention. Fig. 16 is a diagram exemplifying the system information 161 in the second exemplary embodiment of the present invention. Fig. 19 is a diagram exemplifying the VM image information 171 in the second exemplary embodiment of the present invention.

Here, it is assumed that pieces of system information 161e and 161f shown in Fig. 16 are stored in the system information storage unit 160, and pieces of VM image information 171e and 171f shown in Fig. 19 are stored in the VM image information storage unit 170.

Furthermore, it is assumed that the system construction device 100 receives an input of a system construction request including system configuration information shown in Fig. 15, and stores system information 161g shown in Fig. 16, in the system information storage unit 160.

In Step S103 of the VM image generation process (Fig. 12), the VM image generation unit 110 judges whether a generation condition of the VM image is satisfied. Here, as the generation condition, 'there is a set of pieces of system configuration information in which a basic VM image is the same and at least one additional construction process is the same' is used.

Next, in Step S104, the VM image generation unit 110 generates VM image configuration information regarding a set of pieces of system configuration information having the largest improvement degree of process efficiency.

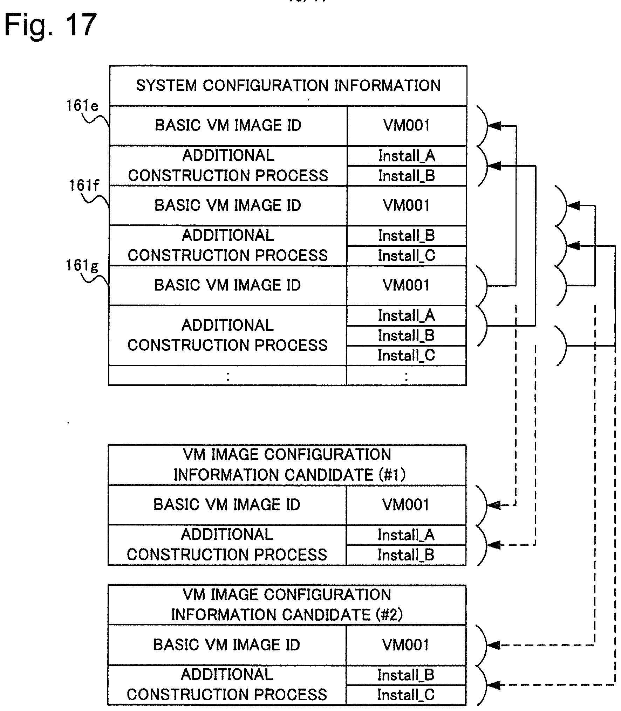

Fig. 17 is a diagram showing an example of generating the VM image configuration information in the second exemplary embodiment of the present invention.

For example, in Fig. 17, regarding a set of the system configuration information of the system information 161g and the system configuration information of the system information 161e, basic VM image 'VM001' is the same and additional construction processes 'Install_A' and 'Install_B' are the same. Accordingly, the set of the system configuration information of the system information 161g and the system configuration information of the system information 161e satisfies the generation condition mentioned above.

Moreover, in Fig. 17, a set of regarding the system configuration information of the system information 161g and the system configuration information of the system information 161f, basic VM image 'VM001' is the same and additional construction processes 'Install_B' and 'Install_C' are the same. Accordingly, the set of the system configuration information of the system information 161g and the system configuration information of the system information 161f satisfies the generation condition mentioned above.

The VM image generation unit 110 generates a configuration information candidate (#1) in which basic VM image 'VM001' and additional construction processes 'Install_A', 'Install_B' are set, and a configuration information candidate (#2) in which basic VM image 'VM001' and additional construction processes 'Install_B', 'Install_C' are set, as shown in Fig. 17.

The VM image generation unit 110 calculates an improvement degree of process efficiency for each of the generated configuration information candidates by carrying out a way similar to Step S303 of the VM image deletion process (Fig. 14).

Fig. 18 is a diagram exemplifying a result of calculating the improvement degree of process efficiency for each of the configuration information candidates.

For example, the VM image generation unit 110 calculates the improvement degree of process efficiency for each of the configuration information candidates as shown in Fig. 18.

The VM image generation unit 110 selects a configuration information candidate having the largest improvement degree of process efficiency, as the VM image configuration information.

For example, the VM image generation unit 110 selects the configuration information candidate (#2) shown in Fig. 17 having the large improvement degree of process efficiency, as the VM image configuration information.

Next, in Step S106, the VM image generation unit 110 generates a VM image according to the selected VM image configuration information.

For example, the VM image generation unit 110 acquires an identifier 'VM201' of the VM image which is generated according to the configuration information candidate (#2) shown in Fig. 17. The VM image generation unit 110 stores the VM image information 171g, which is related to VM image 'VM201', in the VM image information storage unit 170, as shown in Fig. 19.

### <System construction process>

Next, the system construction process will be explained.

In Step 201 of the system construction process (Fig. 13), the configuration information conversion unit 140 judges whether there is a VM image which satisfies a conversion condition of the system configuration information. Here, as the conversion condition, 'a basic VM image is the same as a basic VM image of the system configuration information, and all of additional construction processes are included in additional construction processes of the system configuration information' is used. The configuration information conversion unit 140 judges whether there is a VM image which has VM image configuration information satisfying the conversion condition.

In Step 202, the configuration information conversion unit 140 converts the system configuration information by using the VM image configuration information which satisfies the conversion condition.

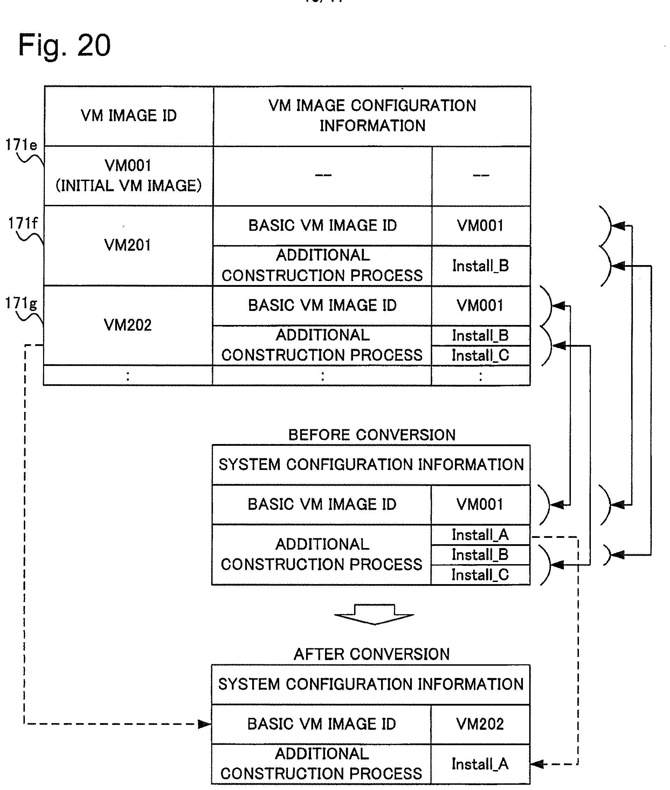

Fig. 20 is a diagram showing an example of converting the system configuration information in the second exemplary embodiment of the present invention.

For example, in Fig. 20, regarding VM image 'VM 201' of the VM image information 171f, basic VM image 'VM001' of the VM image configuration information is the same as the basic VM image of the system configuration information (before conversion), and additional construction process 'Install_B' is included in the additional construction processes of the system configuration information. Accordingly, VM image 'VM201' satisfies the conversion condition mentioned above.

Moreover, regarding VM image 'VM 202' of the VM image information 171g, basic VM image 'VM001' of the VM image configuration information is the same as the basic VM image of the system configuration information (before conversion), and additional construction processes 'Install_B', 'Install_C' are included in the additional construction processes of the system configuration information. Accordingly, VM image 'VM202' satisfies the conversion condition mentioned above.

The configuration information conversion unit 140 converts the system configuration information by using VM image configuration information of VM image 'VM202' which has the largest number of additional construction processes.

The configuration information conversion unit 140 converts the system configuration information (before conversion) into system configuration information (after conversion) in which 'VM202' is set as a basic VM image, and 'Install_A, which is obtained by deleting the additional construction processes of the VM image configuration information of VM image 'VM202' from the additional construction processes of the system configuration information, is set as an additional construction process, as shown in Fig. 20.

Next, in Step S203, the construction unit 150 constructs the system on the process device 200 according to the converted system configuration information.

For example, the construction unit 150 deploys basic VM image 'VM202' to the process device 200 according to the system configuration information (after conversion) shown in Fig. 20. Then, the construction unit 150 deploys module 'A' on the VM image 'VM202' by carrying out the additional construction process 'Install_A'.

As described above, the operation of the second exemplary embodiment of the present invention is completed.

Note that, according to the second exemplary embodiment of the present invention, in the VM image generation process, in the case that there are a plurality of sets of pieces of system configuration information each of which satisfies the generation condition, the VM image generation unit 110 selects the set which can generate VM image configuration information having the largest improvement degree of process efficiency, and generates the VM image. Similarly, in the system construction process, in the case that there are a plurality of VM images which satisfy the conversion condition, the configuration information conversion unit 140 may select the VM image having the largest improvement degree of process efficiency, and convert the system configuration information.

According to the second exemplary embodiment of the present invention, in the case of constructing the systems having the configurations different each other, by using a VM image of the virtual machine including a common component, it is possible to carry out the system construction more efficiently in comparison with the first exemplary embodiment.

The reason is that the VM image generation unit 110 generates a VM image regarding a set of pieces of system configuration information in which VM image configuration information having the largest improvement degree of process efficiency is set. Accordingly, it is possible to convert system configuration information by using the VM image which has the large improvement degree of process efficiency, and consequently the time required for the system construction is shortened furthermore.

### (Third exemplary embodiment)

Next, a third exemplary embodiment of the present invention will be explained.

The third exemplary embodiment of the present invention is different from the first exemplary embodiment of the present invention in a point that a VM image of another system, which has been constructed already in the system construction process, is used as a basic VM image of the system configuration information.

A configuration of the third exemplary embodiment of the present invention is the same as the configuration of the first exemplary embodiment (Fig. 2) of the present invention.

Next, an operation of the system construction device 100 in the third exemplary embodiment of the present invention will be explained.

### <VM image generation process>

The VM image generation process in the third exemplary embodiment of the present invention is the same as one in the first exemplary embodiment (Fig. 12) of the present invention.

### <System construction process>

Next, the system construction process will be explained.

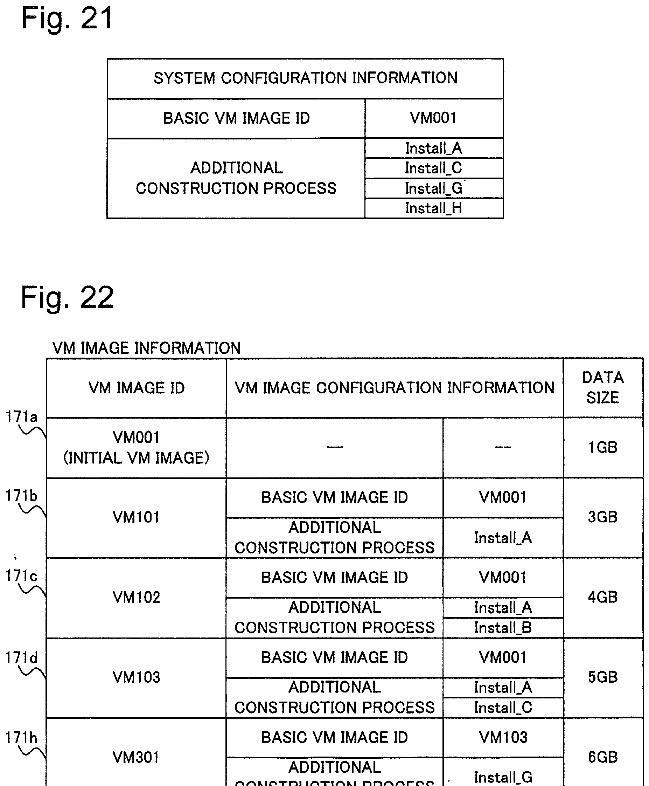

Fig. 21 is a diagram exemplifying the system configuration information in the third exemplary embodiment of the present invention. Fig 22 is a diagram exemplifying the VM image information 171 in the third exemplary embodiment of the present invention.

Here, it is assumed that the VM image information storage unit 170 stores pieces of VM image information 171a to 171d and 171h shown in Fig. 22.

The VM image information 171h is information related to VM image 'VM301' which is, after constructing a system by carrying out additional construction process 'Install_G' on basic VM image 'VM103', generated for the system as explained in the first exemplary embodiment of the present invention.

In Step S201 of the system construction process (Fig. 13), the configuration information conversion unit 140 judges not only whether there is a VM image which satisfies the conversion condition (first conversion condition) mentioned in the first exemplary embodiment, but also whether there is a VM image which satisfies the following second conversion condition.

The second conversion condition is that 'another VM image, which satisfies the first conversion condition, is set as a basic VM image, and all of additional construction processes are included in additional construction processes of the system configuration information'. The configuration information conversion unit 140 may repeat recursively the judgment whether there is a VM image which satisfies the second conversion condition.

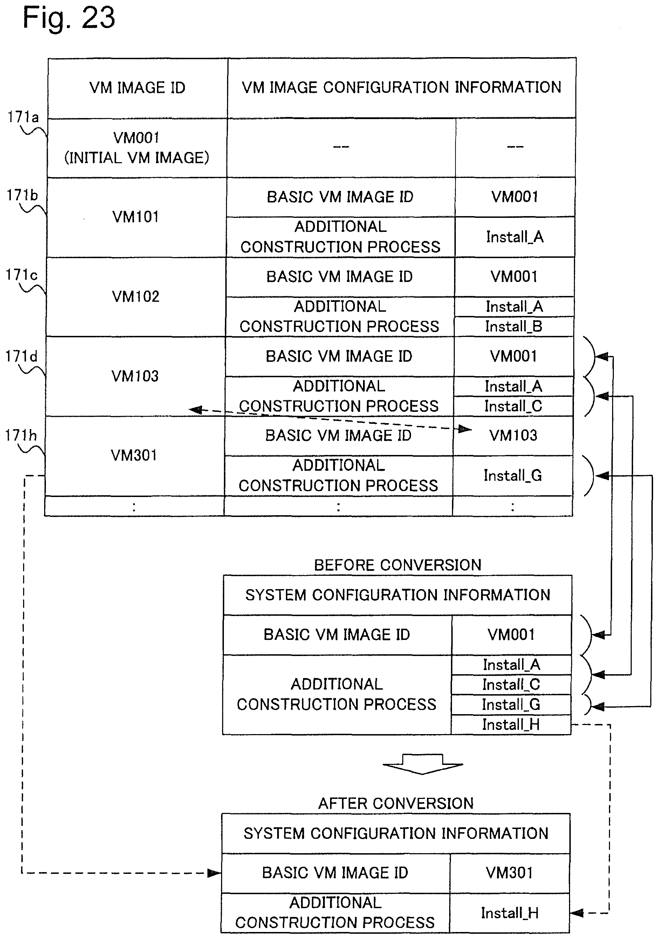

Fig. 23 is a diagram showing an example of converting the system configuration information.

For example, in Fig. 23, regarding VM image 'VM103' of VM image information 171d, basic VM image 'VM001' is the same as the basic VM image of the system configuration information (before conversion), and additional construction processes 'Install_A', 'Install_C' are included in the additional construction processes of the system configuration information. Accordingly, the VM image 'VM103' satisfies the first conversion condition.

Moreover, regarding a VM image 'VM301' of VM image information 171h, basic VM image 'VM103' is a VM image which satisfies the conversion condition (first conversion condition), and additional construction process 'Install_G' is included in the additional construction processes of the system configuration information. Accordingly, the VM image 'VM301' satisfies the second conversion condition.

The configuration information conversion unit 140 converts the system configuration information (before conversion) into system configuration information (after conversion) in which 'VM301' is set as a basic VM image, and 'Install_H, which is obtained by deleting the additional construction processes of the VM images 'VM103' and 'VM301' from the additional construction processes of the system configuration information, is set as an additional construction process, as shown in Fig. 23.

Next, in Step203, the construction unit 150 constructs a system on the process device 200 according to the system configuration information (after conversion).

For example, the construction unit 150 deploys basic VM image 'VM301' to the process device 200 according to the system configuration information (after conversion) shown in Fig. 23. Then, the construction unit 150 deploys module 'H' on VM image 'VM301' by carrying out additional construction process 'Install_H'.

As described above, the operation of the third exemplary embodiment of the present invention is completed.

According to the third exemplary embodiment of the present invention, it is possible to use a VM image of the system, which has been constructed by using the system configuration information converted in the system construction process, as a basic VM image in the other system construction process.

The reason is that the configuration information conversion unit 140 judges whether a VM image, in which the other VM image satisfying the conversion condition is set as its basic VM image, can be used as a basic VM image.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

### [Reference signs List]

- 100: system construction device
- 110: VM image generation unit
- 120: system information acquisition unit
- 130: VM image deletion unit
- 140: configuration information conversion unit
- 150: construction unit
- 160: system information storage unit
- 161: system information
- 170: VM image information storage unit
- 171: VM image information
- 180: VM image usage record storage unit
- 181: VM image usage record
- 190: additional construction process record storage unit
- 191: additional construction process record
- 200: process device
- 210: VM management unit
- 220: VM
- 230: VM image storage unit
- 240: module storage unit

## Claims

1. A system construction device (100) comprising:
an acquisition means (120) for acquiring a plurality of pieces of configuration information regarding respective systems each indicating an identifier of a virtual machine and an identifier of an additional module to be deployed on the virtual machine; and
a generation means (110) for generating, when there is a set of pieces of configuration information in which identifiers of a virtual machine are matched and identifiers of at least one additional module are matched among the acquired pieces of configuration information, an image file for operating the virtual machine having the respective matched identifier and the additional module having the respective matched identifier, by constructing a virtual machine including the virtual machine having the respective matched identifier and the additional module having the respective matched identifier.

2. The system construction device (100) according to claim 1, wherein
each of the plural pieces of configuration information indicates an identifier of a basic VM image for constructing the virtual machine and an identifier of the additional module to be deployed on the virtual machine, as a component, and
the generation means (110) extracts a set of pieces of configuration information in which the basic VM image is the same and at least one additional module is the same from the plural pieces of configuration information, generates a VM image using the basic VM image and the same additional module with respect to the extracted set as a component, as the image file, and outputs an identifier and configuration information of the generated VM image.

3. The system construction device (100) according to claim 2, wherein
a sequential deployment order is defined for additional modules,
the generation means (110) extracts a set of pieces of configuration information in which the basic VM image is the same and at least one top additional module in a sequential deployment order is the same from the plural pieces of configuration information, generates a VM image using the basic VM image and the same top additional module in the sequential deployment order with respect to the extracted set as a component.

4. The system construction device (100) according to claim 2 or 3, wherein
the generation means (110) selects a set having the largest number of the same additional modules from a plurality of the sets.

5. The system construction device (100) according to claim 2 or 3, wherein
the generation means (110) selects, from a plurality of the sets, a set having the largest improvement degree of process efficiency of a VM image generated on the basis of the set, which is calculated on the basis of a load required for deploying each additional module in the configuration information of the VM image generated on the basis of the set.

6. The system construction device (100) according to any one of claims 2 to 5, further comprising:
a VM image information storage means (170) for storing, in association with an identifier of each of the VM images generated by the generation means (110), the configuration information of the VM image; and
a configuration information conversion means (140) for, in the case that a configuration information of a system to be constructed is inputted, extracting a VM image of which a basic VM image is the same as a basic VM image of the system to be constructed and of which all of additional modules are included in additional modules of the system to be constructed, from the VM images of each of which the configuration information is stored in the VM image information storage means (170), converting the configuration information of the system to be constructed by setting an identifier of the extracted VM image and an identifier of an additional module which is obtained by deleting the additional modules of the extracted VM module from the additional modules of the system to be constructed, as a component, and outputting the converted configuration information.

7. The system construction device (100) according to claim 6, wherein
a sequential deployment order is defined for additional modules,
the configuration information conversion means (140) extracts a VM image of which a basic VM image is the same as a basic VM image of the system to be constructed, of which all of additional modules are included in additional modules of the system to be constructed, and of which an order of each of the additional modules is the same as an order of the corresponding additional module of the system to be constructed, from the VM images of each of which the configuration information is stored in the VM image information storage means (170).

8. The system construction device (100) according to claim 6 or 7, wherein
the configuration information conversion means (140) selects a VM image having the largest number of the additional modules from the extracted VM images.

9. The system construction device (100) according to claim 6 or 7, wherein
the configuration information conversion means (140) selects a VM image having the largest improvement degree of process efficiency which is calculated on the basis of a load required for deploying each additional module.

10. The system construction device (100) according to any one of claims 6 to 9, wherein
the VM image information storage means (170) stores, in association with an identifier of the VM images of a system constructed according to the converted configuration information, the converted configuration information.

11. The system construction device (100) according to claim 10, wherein
the configuration information conversion means (140) extracts a VM image of which a basic VM image is the extracted VM image and of which all of additional modules are included in the additional modules of the system to be constructed.

12. The system construction device (100) according to any one of claims 6 to 11, wherein
the generation means (110) generates, in the case that new configuration information of the system to be constructed is inputted, a VM image on the basis of the plural pieces of configuration information including the new configuration information of the system to be constructed.

13. The system construction device (100) according to any one of claims 6 to 12, further comprising a VM image deletion means (130) for deleting a VM image, of which usage frequency in system construction is equal to or smaller than a predetermined threshold value, from the VM images of each of which the configuration information is stored in the VM image information storage means (170).

14. The system construction device (100) according to any one of claims 6 to 12, further comprising a VM image deletion means (130) for deleting a VM image, of which an improvement degree of process efficiency of VM image, which is calculated on the basis of a load required for deploying each additional module, is equal to or smaller than a predetermined threshold value, from the VM images of each of which the configuration information_is stored in the VM image information storage means (170).

15. A system construction method comprising:
acquiring a plurality of pieces of configuration information regarding respective systems each indicating an identifier of a virtual machine and an identifier of an additional module to be deployed on the virtual machine; and
generating, when there is a set of pieces of configuration information in which identifiers of a virtual machine are matched and identifiers of at least one additional module are matched among the acquired pieces of configuration information, an image file for operating the virtual machine having the respective matched identifier and the additional module having the respective matched identifier, by constructing a virtual machine including the virtual machine having the respective matched identifier and the additional module having the respective matched identifier.

## Patentansprüche

1. Systemkonstruktionsvorrichtung (100), die aufweist:
ein Erfassungsmittel (120) zum Erfassen von mehreren Konfigurationsinformationen hinsichtlich jeweiliger Systeme, die jeweils eine Kennung einer virtuellen Maschine und eine Kennung eines Zusatzmoduls angeben, das an der virtuellen Maschine eingesetzt werden soll; und
ein Erzeugungsmittel (110) zum Erzeugen, wenn es einen Satz von Konfigurationsinformationen, in denen Kennungen einer virtuellen Maschine zusammenpassen und Kennungen von mindestens einem Zusatzmodul zusammenpassen, unter den erfassten Konfigurationsinformationen gibt, einer Abbilddatei zum Betreiben der virtuellen Maschine, die die jeweilige passende Kennung aufweist, und des Zusatzmoduls, das die jeweilige passende Kennung aufweist, durch Konstruieren einer virtuellen Maschine, die die virtuelle Maschine, die die jeweilige passende Kennung aufweist, und das Zusatzmodul umfasst, das die jeweilige passende Kennung aufweist.

2. Systemkonstruktionsvorrichtung (100) nach Anspruch 1, wobei
jede der mehreren Konfigurationsinformationen eine Kennung eines Basis-VM-Abbilds zum Konstruieren der virtuellen Maschine und eine Kennung des Zusatzmoduls, das an der virtuellen Maschine eingesetzt werden soll, als eine Komponente angibt, und
das Erzeugungsmittel (110) einen Satz von Konfigurationsinformationen, in dem das Basis-VM-Abbild dasselbe ist und mindestens ein Zusatzmodul dasselbe ist, aus den mehreren Konfigurationsinformationen extrahiert, ein VM-Abbild mittels des Basis-VM-Abbilds und desselben Zusatzmoduls bezüglich des extrahierten Satzes als eine Komponente als die Abbilddatei erzeugt, und eine Kennung und Konfigurationsinformation des erzeugten VM-Abbilds ausgibt.

3. Systemkonstruktionsvorrichtung (100) nach Anspruch 2, wobei
eine sequentielle Einsatzordnung für Zusatzmodule definiert ist,
das Erzeugungsmittel (110) einen Satz von Konfigurationsinformationen, in dem das Basis-VM-Abbild dasselbe ist und mindestens ein oberstes Zusatzmodul in einer sequentielle Einsatzordnung dasselbe ist, aus den mehreren Konfigurationsinformationen extrahiert, ein VM-Abbild mittels des Basis-VM-Abbilds und desselben obersten Zusatzmoduls in der sequentiellen Einsatzordnung bezüglich des extrahierten Satzes als eine Komponente erzeugt.

4. Systemkonstruktionsvorrichtung (100) nach Anspruch 2 oder 3, wobei
das Erzeugungsmittel (110) einen Satz, der die größte Anzahl desselben Zusatzmoduls aufweist, aus den mehreren Sätzen auswählt.

5. Systemkonstruktionsvorrichtung (100) nach Anspruch 2 oder 3, wobei
das Erzeugungsmittel (110) aus den mehreren Sätzen einen Satz auswählt, der den größten Verbesserungsgrad der Prozesseffizienz eines VM-Abbilds aufweist, das auf der Grundlage des Satzes erzeugt wird, der auf der Grundlage einer Belastung berechnet wird, die zum Einsetzen jedes Zusatzmoduls in die Konfigurationsinformation des VM-Abbilds benötigt wird, das auf der Grundlage des Satzes erzeugt wird.

6. Systemkonstruktionsvorrichtung (100) nach einem der Ansprüche 2 bis 5, die ferner aufweist:
ein VM-Abbildinformationsspeichermittel (170) zum Speichern, in Verbindung mit einer Kennung von jedem der VM-Abbilder, die durch das Erzeugungsmittel (110) erzeugt werden, der Konfigurationsinformation des VM-Abbilds; und
ein Konfigurationsinformations-Umwandlungsmittel (140), zum im Fall, dass eine Konfigurationsinformation eines zu konstruierenden Systems eingegeben wird, Extrahieren eines VM-Abbilds, von dem ein Basis-VM-Abbild dasselbe wie ein Basis-VM-Abbild des zu konstruierenden Systems ist und von dem alle Zusatzmodule in Zusatzmodulen des zu konstruierenden Systems enthalten sind, aus den VM-Abbildern, von denen die Konfigurationsinformation im VM-Abbildinformationsspeichermittel (170) gespeichert ist, Umwandeln der Konfigurationsinformation des zu konstruierenden Systems durch Setzen einer Kennung des extrahierten VM-Abbilds und einer Kennung eines Zusatzmoduls, das durch Löschen der Zusatzmodule des extrahierten VM-Moduls aus den Zusatzmodulen des zu konstruierenden Systems erhalten wird, als eine Komponente, und Ausgeben der umgewandelten Konfigurationsinformation.

7. Systemkonstruktionsvorrichtung (100) nach Anspruch 6, wobei
eine sequentielle Einsatzordnung für Zusatzmodule definiert ist,
das Konfigurationsinformations-Umwandlungsmittel (140) ein VM-Abbild extrahiert, von dem ein Basis-VM-Abbild dasselbe wie ein Basis-VM-Abbild des zu konstruierenden Systems ist, von dem alle Zusatzmodule in Zusatzmodulen des zu konstruierenden Systems enthalten sind, und von dem eine Ordnung von jedem der Zusatzmodule dieselbe ist wie eine Ordnung des entsprechenden Zusatzmoduls des zu konstruierenden Systems, aus den VM-Abbildern, von denen die Konfigurationsinformation im VM-Abbildinformationsspeichermittel (170) gespeichert ist.

8. Systemkonstruktionsvorrichtung (100) nach Anspruch 6 oder 7, wobei
das Konfigurationsinformations-Umwandlungsmittel (140) ein VM-Abbild, das die größte Anzahl der Zusatzmodule aufweist, aus den extrahierten VM-Abbildern auswählt.

9. Systemkonstruktionsvorrichtung (100) nach Anspruch 6 oder 7, wobei
das Konfigurationsinformations-Umwandlungsmittel (140) ein VM-Abbild auswählt, das den größten Verbesserungsgrad der Prozesseffizienz aufweist, der auf der Grundlage einer Belastung berechnet wird, die zum Einsetzen jedes Zusatzmoduls benötigt wird.

10. Systemkonstruktionsvorrichtung (100) nach einem der Ansprüche 6 bis 9, wobei
das VM-Abbildinformationsspeichermittel (170) in Verbindung mit einer Kennung der VM-Abbilder eines Systems, das gemäß der umgewandelten Konfigurationsinformation konstruiert wird, die umgewandelte Konfigurationsinformation speichert.

11. Systemkonstruktionsvorrichtung (100) nach Anspruch 10, wobei
das Konfigurationsinformations-Umwandlungsmittel (140) ein VM-Abbild extrahiert, von dem ein Basis-VM-Abbild das extrahierte VM-Abbild ist und von dem alle Zusatzmodule in den Zusatzmodulen des zu konstruierenden Systems enthalten sind.

12. Systemkonstruktionsvorrichtung (100) nach einem der Ansprüche 6 bis 11, wobei
das Erzeugungsmittel (110), im Fall, dass eine neue Konfigurationsinformation des zu konstruierenden Systems eingegeben wird, ein VM-Abbild auf der Grundlage der meh-reren Konfigurationsinformationen erzeugt, die die neuen Konfigurationsinformationen des zu konstruierenden Systems enthalten.

13. Systemkonstruktionsvorrichtung (100) nach einem der Ansprüche 6 bis 12, die ferner ein VM-Abbildlöschmittel (130) zum Löschen eines VM-Abbilds, dessen Nutzungshäufigkeit in der Systemkonstruktion gleich oder kleiner als ein vorgegebener Schwellenwert ist, aus den VM-Abbildern aufweist, von denen die Konfigurationsinformation im VM-Abbildinformationsspeichermittel (170) gespeichert ist.

14. Systemkonstruktionsvorrichtung (100) nach einem der Ansprüche 6 bis 12, die ferner ein VM-Abbildlöschmittel (130) zum Löschen eines VM-Abbilds, von dem ein Verbesserungsgrad der Prozesseffizienz des VM-Abbilds, der auf der Grundlage einer Belastung berechnet wird, zum Einsetzen jedes Zusatzmoduls benötigt wird, gleich oder kleiner als ein vorgegebener Schwellenwert ist, aus den VM-Abbildern aufweist, von denen die Konfigurationsinformation im VM-Abbildinformationsspeichermittel (170) gespeichert ist.

15. Systemkonstruktionsverfahren, das aufweist:
Erfassen von mehreren Konfigurationsinformationen hinsichtlich jeweiliger Systeme, die jeweils eine Kennung einer virtuellen Maschine und eine Kennung eines Zusatzmoduls angeben, das an der virtuellen Maschine eingesetzt werden soll; und
Erzeugen, wenn es einen Satz von Konfigurationsinformationen, in denen Kennungen einer virtuellen Maschine zusammenpassen und Kennungen von mindestens einem Zusatzmodul zusammenpassen, unter den erfassten Konfigurationsinformationen gibt, einer Abbilddatei zum Betreiben der virtuellen Maschine, die die jeweilige passende Kennung aufweist, und des Zusatzmoduls, das die jeweilige passende Kennung aufweist, durch Konstruieren einer virtuellen Maschine, die die virtuelle Maschine, die die jeweilige passende Kennung aufweist, und das Zusatzmodul umfasst, das die jeweilige passende Kennung aufweist.

## Revendications

1. Dispositif de construction de système (100), comprenant :
une unité d'acquisition (120) destinée à acquérir une pluralité d'éléments d'informations de configuration relatives à des systèmes respectifs indiquant chacun un identifiant d'une machine virtuelle et un identifiant d'un module complémentaire à déployer sur la machine virtuelle ; et
une unité de génération (110) destinée à générer, s'il existe un ensemble d'éléments d'informations de configuration où des identifiants d'une machine virtuelle concordants sont détectés, et si des identifiants concordants d'au moins un module complémentaire sont détectés parmi les éléments d'informations de configuration acquis, un fichier image destiné à faire fonctionner la machine virtuelle pourvue de l'identifiant respectif détecté et le module complémentaire pourvu de l'identifiant respectif détecté, par construction d'une machine virtuelle comprenant la machine virtuelle pourvue de l'identifiant respectif détecté et du module complémentaire pourvu de l'identifiant respectif détecté.

2. Dispositif de construction de système (100) selon la revendication 1, où
chaque élément de la pluralité d'éléments d'informations de configuration indique un identifiant d'une image VM de base pour construire la machine virtuelle et un identifiant du module complémentaire à déployer sur la machine virtuelle en tant que composant, et où
l'unité de génération (110) extrait un ensemble d'éléments d'informations de configuration où l'image VM de base est identique et où au moins un module complémentaire est identique, de la pluralité d'éléments d'informations de configuration, génère une image VM au moyen de l'image VM de base et du module complémentaire identique par rapport à l'ensemble extrait en tant que composant, en tant que fichier image, et émet un identifiant et des informations de configuration de l'image VM générée.

3. Dispositif de construction de système (100) selon la revendication 2, où
un ordre de déploiement séquentiel est défini pour des modules complémentaires, l'unité de génération (110) extrait de la pluralité d'éléments d'informations de configuration un ensemble d'éléments d'informations de configuration où l'image VM de base est identique et au moins un module complémentaire supérieur est identique dans un ordre de déploiement séquentiel, génère une image VM au moyen de l'image VM de base et du module complémentaire supérieur identique dans l'ordre de déploiement séquentiel par rapport à l'ensemble extrait en tant que composant.

4. Dispositif de construction de système (100) selon la revendication 2 ou la revendication 3, où
l'unité de génération (110) sélectionne dans une pluralité d'ensembles un ensemble ayant le nombre maximal de modules complémentaires identiques.

5. Dispositif de construction de système (100) selon la revendication 2 ou la revendication 3, où
l'unité de génération (110) sélectionne dans une pluralité d'ensembles un ensemble ayant le degré maximal d'optimisation de performance de processus d'une image VM générée sur la base de l'ensemble, calculé sur la base d'une charge exigée pour déployer chaque module complémentaire dans les informations de configuration de l'image VM générée sur la base de l'ensemble.

6. Dispositif de construction de système (100) selon l'une des revendications 2 à 5, comprenant en outre :
une unité de stockage d'informations d'image VM (170) destinée à stocker, en association avec un identifiant de chacune des images VM générées par l'unité de génération (110), les informations de configuration de l'image VM ; et une unité de conversion d'informations de configuration (140) destinée, en cas d'entrée d'informations de configuration d'un système à construire, à extraire une image VM dont une image VM de base est identique à une image VM de base du système à construire et dont tous les modules complémentaires sont compris dans des modules complémentaires du système à construire, des images VM dont les informations de configuration sont stockées pour chacune dans l'unité de stockage d'informations d'image VM (170), convertir les informations de configuration du système à construire par paramétrage d'un identifiant de l'image VM extraite et d'un identifiant d'un module complémentaire obtenu par suppression des modules complémentaires du module VM extrait des modules complémentaires du système à construire, en tant que composant, et émettre les informations de configuration converties.

7. Dispositif de construction de système (100) selon la revendication 6, où
un ordre de déploiement séquentiel est défini pour des modules complémentaires,
l'unité de conversion d'informations de configuration (140) extrait une image VM dont une image VM de base est identique à une image VM de base du système à construire, dont tous les modules complémentaires sont compris dans des modules complémentaires du système à construire, et dont un ordre de chacun des modules complémentaires est identique à un ordre du module complémentaire du système à construire correspondant, des images VM dont les informations de configuration sont stockées pour chacune l'unité de stockage d'informations d'image VM (170).

8. Dispositif de construction de système (100) selon la revendication 6 ou la revendication 7, où
l'unité de conversion d'informations de configuration (140) sélectionne une image VM ayant le nombre maximal de modules complémentaires dans les images VM extraites.

9. Dispositif de construction de système (100) selon la revendication 6 ou la revendication 7, où
l'unité de conversion d'informations de configuration (140) sélectionne une image VM ayant le degré maximal d'optimisation de performance de processus calculé sur la base d'une charge exigée pour déployer chaque module complémentaire.

10. Dispositif de construction de système (100) selon l'une des revendications 6 à 9, où
l'unité de stockage d'informations d'image VM (170) stocke les informations de configuration converties, en association avec un identifiant des images VM d'un système construit en fonction des informations de configuration converties.

11. Dispositif de construction de système (100) selon la revendication 10, où
l'unité de conversion d'informations de configuration (140) extrait une image VM dont une image VM de base est l'image VM extraite et dont tous les modules complémentaires sont compris dans les modules complémentaires du système à construire.

12. Dispositif de construction de système (100) selon l'une des revendications 6 à 11, où, en cas d'entrée de nouvelles informations de configuration du système à construire, l'unité de génération (110) génère une image VM sur la base de la pluralité d'éléments d'informations de configuration comprenant les nouvelles informations de configuration du système à construire.

13. Dispositif de construction de système (100) selon l'une des revendications 6 à 12, comprenant en outre une unité de suppression d'image VM (130) destinée à supprimer une image VM, dont la fréquence d'utilisation dans la construction de système est égale ou inférieure à une valeur seuil prédéfinie, parmi les images VM dont les informations de configuration sont stockées, pour chacune, dans l'unité de stockage d'informations d'image VM (170).

14. Dispositif de construction de système (100) selon l'une des revendications 6 à 12, comprenant en outre une unité de suppression d'image VM (130) destinée à supprimer une VM, dont un degré d'optimisation de performance de processus d'image VM, calculé sur la base d'une charge exigée pour déployer chaque module complémentaire, est égale ou inférieure à une valeur seuil prédéfinie, parmi les images VM dont les informations de configuration sont stockées, pour chacune, dans l'unité de stockage d'informations d'image VM (170).

15. Procédé de construction de système comprenant :
l'acquisition d'une pluralité d'éléments d'informations de configuration relatives à des systèmes respectifs indiquant chacun un identifiant d'une machine virtuelle et un identifiant d'un module complémentaire à déployer sur la machine virtuelle ; et
la génération, s'il existe un ensemble d'éléments d'informations de configuration où des identifiants d'une machine virtuelle concordants sont détectés, et si des identifiants concordants d'au moins un module complémentaire sont détectés parmi les éléments d'informations de configuration acquis, d'un fichier image destiné à faire fonctionner la machine virtuelle pourvue de l'identifiant respectif détecté et le module complémentaire pourvu de l'identifiant respectif détecté, par construction d'une machine virtuelle comprenant la machine virtuelle pourvue de l'identifiant respectif détecté et du module complémentaire pourvu de l'identifiant respectif détecté.
